# EUROPÄISCHE PATENTSCHRIFT

(11) **EP 2 125 339 B1**
(45) Veröffentlichungstag und Bekanntmachung des Hinweises auf die Patenterteilung: **08.02.2012**
(21) Anmeldenummer: 08854045.5
(22) Anmeldetag: 07.11.2008
(51) Int. Cl.: B29C 67/00

(54) **VERFAHREN ZUM HERSTELLEN EINES DREIDIMENSIONALEN OBJEKTS MITTELS LASERSINTERN**
METHOD FOR PRODUCING A THREE-DIMENSIONAL OBJECT BY MEANS OF LASER SINTERING
PROCÉDÉ DE RÉALISATION D'UN OBJET TRIDIMENSIONNEL PAR FRITTAGE LASER

(30) Priorität: 27.11.2007 DE 102007056984
(43) Veröffentlichungstag der Anmeldung: 02.12.2009
(73) Patentinhaber: EOS GmbH Electro Optical Systems, 82152 Krailling (DE)
(72) Erfinder: PHILIPPI, Jochen, 82166 Gräfelfing (DE); MATTES, Thomas, 82205 Gilching (DE)
(74) Vertreter: Prüfer & Partner GbR European Patent Attorneys
(86) Internationale Anmeldenummer: PCT/EP2008/009422
(87) Internationale Veröffentlichungsnummer: WO 2009/068165

(56) Entgegenhaltungen:
- EP-A- 1 466 718
- DE-A1- 4 112 695

## Beschreibung

Die Erfindung betrifft ein Verfahren zum Herstellen eines dreidimensionalen Objekts mittels Lasersintern.

Ein Verfahren zum Herstellen eines dreidimensionalen Objekts mittels Lasersintern Gemäß dem Oberbegriff des Anspruchs 1 ist beispielsweise aus der EP 1 466 718 A2 bekannt. Dort wird eine Infrarotkamera verwendet, um die augenblickliche Temperatur der obersten Schicht des Pulvers zu erfassen. Das aufgenommene Temperaturbild dient dazu, über ein Temperatursteuersystem ein Strahlungsheizungssystem nachzuregeln. Damit kann durch die Temperatursteuerung in den obersten Schichten des Teilebettes ein unerwünschtes Schrumpfen reduziert werden.

Aus der EP 1 296 788 B1 ist ein Verfahren zum Herstellen eines dreidimensionalen Objekts durch schichtweises Schmelzen eines pulverförmigen Materials an den dem Objekt entsprechenden Stellen der jeweiligen Schicht mittels einer Elektronenstrahlkanone bekannt. Zum Erfassen der Oberflächeneigenschaften einer Oberflächenschicht in dem Pulverbett wird eine Kamera verwendet, die teilweise die Temperaturverteilung der Oberflächenschicht misst und teilweise das Auftreten von Oberflächen-unregelmäßigkeiten.aufgrund von Schatteninformationen erfasst, die durch Unregelmäßigkeiten auf der Oberfläche entstehen. Die erhaltenen Informationen über die Temperaturverteilung werden verwendet, um eine möglichst gleichmäßige Temperaturverteilung auf der Oberfläche zu erhalten. Die Schatteninformationen werden verwendet, um Abweichungen zwischen den Maßen des hergestellten Objekts und den Sollmaßen zu kontrollieren. Da die Kamera die Oberflächeninformationen aufgrund von Schatteninformationen erfasst, ist eine weitere Beleuchtung zum Erzeugen derartiger Schatteninformationen nötig. Auch in der Druckschrift DE 103 10 385 B4 ist die Verwendung eines seitlichen Lichteinfalls bei der optischen Beobachtung einer Pulverschicht beschrieben.

Im Allgemeinen ist eine zusätzliche Lichtquelle störend weil eine Ausleuchtung mit hoher Leistung erforderlich ist, um die Heizstrahler zu überblenden, was Abwärme erzeugt und eine synchronisierte Blitz-Beleuchtung notwendig macht. Ferner hängen die Schatteninformationen sehr empfindlich davon ab, wie die Beleuchtungsanordnung ist. So ist für die Erzeugung des Schattens oft eine Ausleuchtung aus verschiedenen Richtungen erforderlich. Dies erfordert Mehrfachaufnahmen und mehrere Lichtquellen. Dennoch ist eine Strukturerkennung manchmal nur sehr schwer möglich.

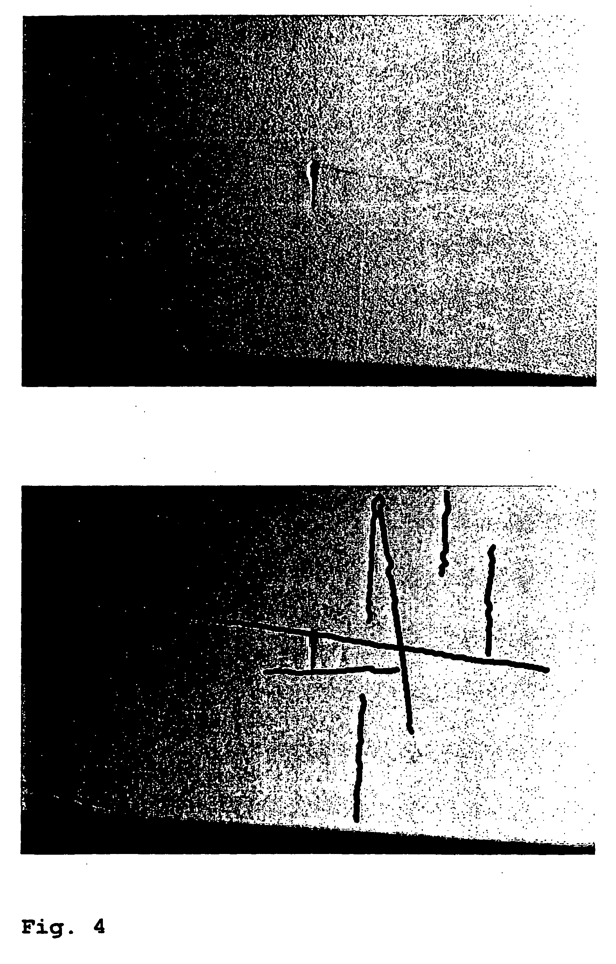

Fig. 4 zeigt beispielhaft in dem oberen Bild eine Aufnahme einer aufgetragenen Schicht mit sichtbarem Licht. In dieser Schicht sind zwei Fehler zu erkennen. Eine deutlich ausgeprägte Vertiefung in der Bildmitte und ein keilförmiger Bereich, in dem kein Schichtauftrag erfolgte. Der keilförmige Bereich erstreckt sich nahezu über die gesamte Breite des Bildes und hat eine nur schlecht erkennbare untere Kante. In dem unteren Bild ist gezeigt, dass eine automatische Bilderkennungssoftware nicht in der Lage ist, diese untere Kante einwandfrei zu erkennen. Selbst bei empfindlich eingestelltem Kantenfilter kann die untere Kante nur in einem Teilbereich erkannt werden. Stattdessen werden aufgrund der hohen Empfindlichkeit auch dort Kanten gefunden, wo die Schicht eigentlich einwandfrei ist. Eine genaue Erkennung des Bereichs mit dem fehlenden Schichtauftrag ist damit unmöglich, sodass der Fehler im Schichtauftrag nicht gezielt behoben werden kann.

Es ist Aufgabe der Erfindung, ein Verfahren zum Herstellen eines dreidimensionalen Objekts mittels schichtweisen Verfestigens eines pulverförmigen Materials an den dem Objekt entsprechenden Stellen der jeweiligen Schicht bereit zu stellen, bei dem die Qualität des hergestellten Objekts verbessert wird.

Die Aufgabe wird gelöst durch ein Verfahren nach Patentanspruch 1. Weiterbildungen der Erfindung sind in den Unteransprüchen angegeben.

Die Erfindung weist den Vorteil auf, dass Dosier- und Beschichtungsfehler während des Bauprozesses automatisch festgestellt und ggf. korrigiert werden können. Damit ist eine lückenlose Qualitätssicherung während des Bauvorgangs gewährleistet.

Während im Stand der Technik Schattenwürfe ausgewertet werden, kommt das erfindungsgemäße Verfahren bei der Überwachung der Beschichtung ohne zusätzliche Beleuchtung aus. Dadurch ist die Ausleuchtung der Maschine durch sichtbares Licht nicht störend. Das Verfahren ist ferner nicht von der Farbe und Beschaffenheit des Materials abhängig und kann daher ohne Veränderung des üblichen Aufbaumaterials durch Zusatzstoffe auskommen.

In dem Verfahren gemäß Anspruch 1 wird die Information über Unregelmäßigkeiten/Fehler in einer aufgetragenen Pulverschicht allein aufgrund eines IR-Strahlungsbildes der Pulverschicht gewonnen. Dabei macht man sich zunutze, dass die von einem Bereich ausgesandte Strahlung im Infraroten nicht nur von der Temperatur des Bereichs, sondern auch von dessen Emissions-und Reflexionsgrad abhängig ist.

Wenn man, wie im Stand der Technik, nur an der Temperaturverteilung interessiert ist, so versucht man durch Korrekturen den Einfluss der beiden anderen Größen, Emissions- und Reflexionsgrad, zu eliminieren. Gemäß der Erfindung macht man sich jedoch gerade zunutze, dass alle drei Größen sich im Infraroten stärk ändern, wenn es Bereiche mit Unterschieden im Pulverauftrag gibt. Eine Eliminierung des Einflusses des Emissions- und Reflexionsgrades findet nicht statt. Durch die hohen Kontraste, die die Bereiche mit unterschiedlichen Eigenschaften im Infraroten zeigen ist eine besonders präzise Beschichtungsüberwachung möglich. Selbst wenn innerhalb einer frisch aufgetragenen Schicht die Temperatur überall gleich ist, so sieht man im IR-Strahlungsbild dennoch Farbunterschiede. Diese sind darauf zurückzuführen, dass Irregularitäten in einer Schicht (beispielsweise Kanten oder Schichtdickenschwankungen) zu einem unterschiedlichen Emissions- und Reflexionsgrad führen.

Weitere Vorteile und Zweckmäßigkeiten ergeben sich aus der Beschreibung eines Ausführungsbeispieles anhand der Figuren.

Von den Figuren zeigen:
Fig. 1 eine schematische Darstellung einer Lasersintervorrichtung,
Fig. 2 eine schematische Darstellung des Aufbaus zur Überwachung der Beschichtung,
Fig. 3a bis 3c Beispiele von IR-Strahlungsbildern bei Fehlern die beim Beschichtungsvorgang auftreten können und
Fig. 4 eine Veranschaulichung der Probleme einer Beschichtungsüberwachung mit sichtbarem Licht.

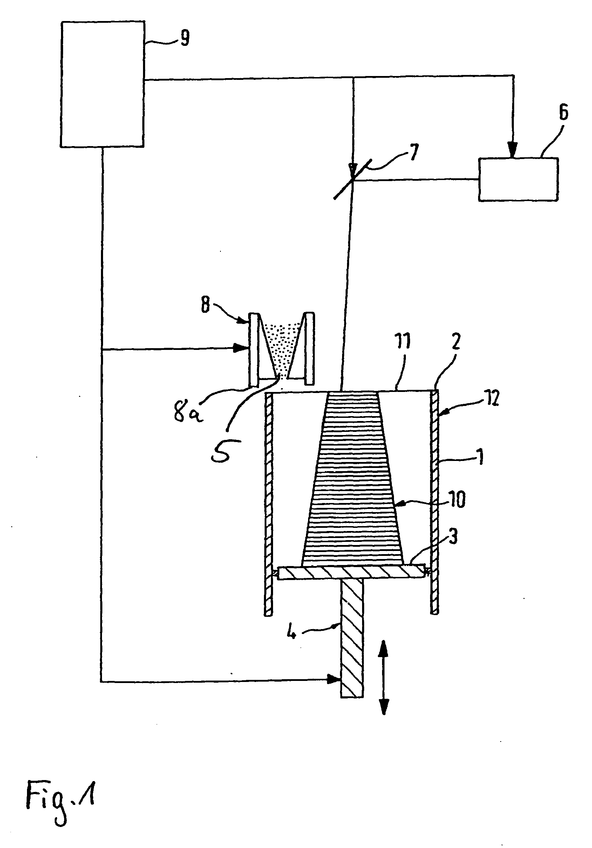

Wie am besten aus Fig. 1 ersichtlich ist, weist eine erfindungsgemäße Lasersintervorrichtung einen nach oben und unten offenen Baurahmen 1 mit einem oberen Rand 2 auf. In dem Baurahmen ist eine Bauplattform 3 vorgesehen, die mit einem Vertikalantrieb 4 verbunden ist, durch den sie in vertikaler Richtung auf- und ab bewegt werden kann. Oberhalb des oberen Randes 2 ist eine Verfestigungseinrichtung in Form eines Lasers 6 und eines Strahlablenkungssystems 7 angeordnet. Weiterhin ist noch ein Beschichter 8 zum Aufbringen des pulverförmigen Materials vorgesehen. Der Beschichter beinhaltet beispielsweise einen sich quer über das Baufeld erstreckenden Behälter, der mit einem Pulvervorrat befüllbar ist und der an seiner Unterseite eine Austrittsöffnung 5 aufweist, die sich quer über das Baufeld erstreckt. Ferner weist der Beschichter üblicherweise mindestens eine Klinge 8a zum Erzeugen einer Pulverschicht mit vorbestimmter Dicke auf. Der Laser 6, die Strahlablenkeinrichtung 7, der Beschichter 8 und der Vertikalantrieb 4 werden durch eine Steuerung 9 gesteuert. Bei der Darstellung von Fig. 1 ist ein gebildetes Objekt 10 eingezeichnet, das von nicht verfestigtem Material 11 umgeben ist. Als pulverförmiges Material wird beispielsweise ein pulverförmiges Kunststoffmaterial, wie z.B. ein Polyamid oder Polystyrol verwendet. Für diese Verfahren ist das erfindungsgemäße Verfahren besonders geeignet. Jedoch können auch Materialien wie Metallpulver, Keramikpulver, Formsand und alle sonstigen für das Lasersintern üblichen Materialien verwendet werden.

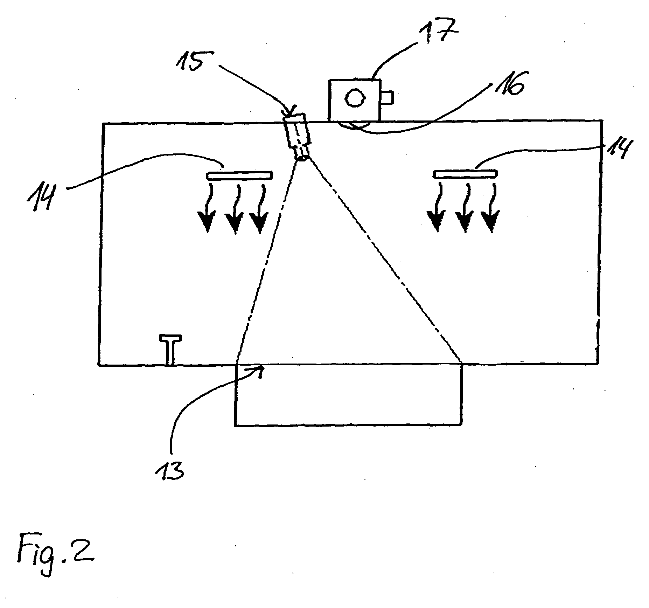

Fig. 2 zeigt ein Detail des Aufbaus der Lasersintervorrichtung. Eine neu aufgetragene Pulverschicht 13 befindet sich in dem Baufeld am oberen Rand 2 des Rahmens 1. Oberhalb des Baufelds sind Heizstrahler 14 angeordnet, die mit einer nicht dargestellten Steuerung verbunden sind und dazu dienen, die neu aufgetragene Pulverschicht auf eine Arbeitstemperatur zu erwärmen, bevor die Belichtung mit dem Laserstrahl erfolgt. Es ist ferner eine Infrarotkamera 15 vorgesehen, die so oberhalb des Baufelds angeordnet ist, dass sie das gesamte Baufeld ausleuchtet. Die Infrarotkamera 15 ist gemäß dem Ausführungsbeispiel im Wellenlängenbereich von etwa 1 µm bis etwa 14 µm sensitiv. Damit ist sie für die Temperaturen, die beim Lasersintern von Kunststoffpulver auftreten, geeignet. Die Wellenlängenempfindlichkeit der Kamera wird jedoch in Abhängigkeit von dem verwendeten Material ausgewählt. Die Infrarotkamera kann entweder seitlich eines Einkoppelfensters 16 für die Laserstrahlung angeordnet sein oder sich hinter dem Einkoppelfenster im Außenraum befinden.

Bei dem erfindungsgemäßen Verfahren wird Schicht für Schicht des pulverförmigen Materials auf die Plattform 3 bzw. eine zuvor verfestigte Schicht aufgetragen und mit dem Laserstrahl an den dem Objekt entsprechenden Stellen verfestigt. Wenn der Beschichter 8 über das Baufeld bewegt wird und eine neue Pulverschicht aufbringt, kann es zu Fehlstellen in der neu aufgetragenen Schicht kommen oder es können sich Ungleichmäßigkeiten bilden. Beispielsweise kann es vorkommen, dass der Beschichter das Pulver nicht gleichmäßig über die Breite oder über die Länge des Baufelds aufträgt und somit an einer Seite mehr Pulver aufgetragen wird als an einer anderen so dass die Dicke der aufgetragenen Pulverschicht über das Baufeld variiert. Ferner kann es auch vorkommen, dass durch Verunreinigungen der Klinge 8a des Beschichters ein oder mehrere Gräben in der aufgetragenen Schicht gebildet sind. Weitere Unregelmäßigkeiten in der neu aufgetragenen Pulverschicht können z.B. durch grobe Pulververunreinigungen oder durch aus dem Beschichtungsniveau durch thermische Verzugseffekte wie z.B. Curl herausragende verfestigte Bereiche gebildet werden. Diese Fehlstellen und/oder Unregelmäßigkeiten in der neu aufgetragenen Pulverschicht werden aufgrund unterschiedlicher Temperatur und/oder unterschiedlichen Emissionsgrades und/oder unterschiedlichen Reflexionsgrades mit der Infrarotkamera nach dem Pulverauftrag erfasst. Dabei werden Bereiche unterschiedlicher Schichtdicke mit unterschiedlicher Farbe wiedergegeben, die einen Rückschluss auf die Oberflächenbeschaffenheit der Schicht gibt. Durch Bildverarbeitung des farbigen Bildes lässt sich somit jede neu aufgetragene Schicht überwachen, indem die Istwerte mit den Sollwerten für die jeweilige Schicht verglichen werden. Werden Fehlstellen oder Unregelmäßigkeiten festgestellt, kann entweder ein zusätzlicher Beschichtungsschritt mit dem Beschichter erfolgen, in dem diese Unregelmäßigkeiten ausgeglichen werden oder die Beschichtungsparameter für die folgenden Schichten können so angepasst werden, dass die Unregelmäßigkeiten im gesamten gebildeten Objekt keine oder keine wesentliche Wirkung haben.

Die Bestimmung des IR-Strahlungsbildes mittels der Infrarotkamera kann entweder bei jedem neuen Schichtauftrag erfolgen, oder sie kann nur für bestimmte Schichten nach Art einer stichprobenhaften Überwachung erfolgen.

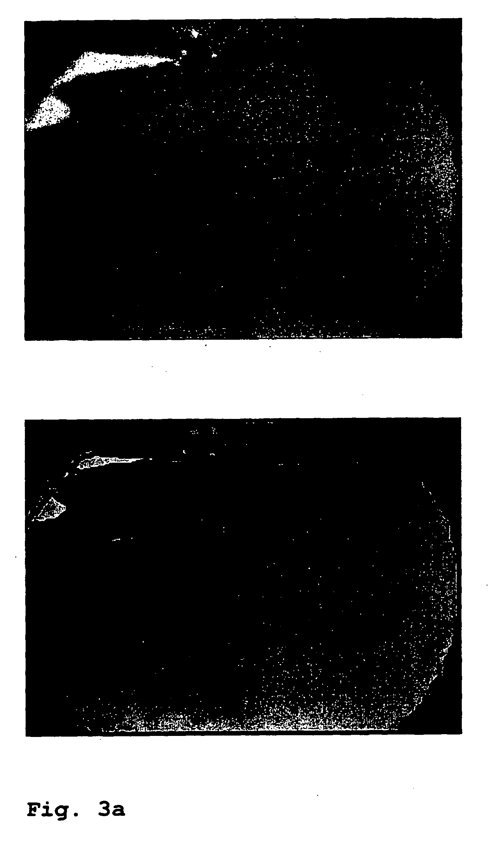

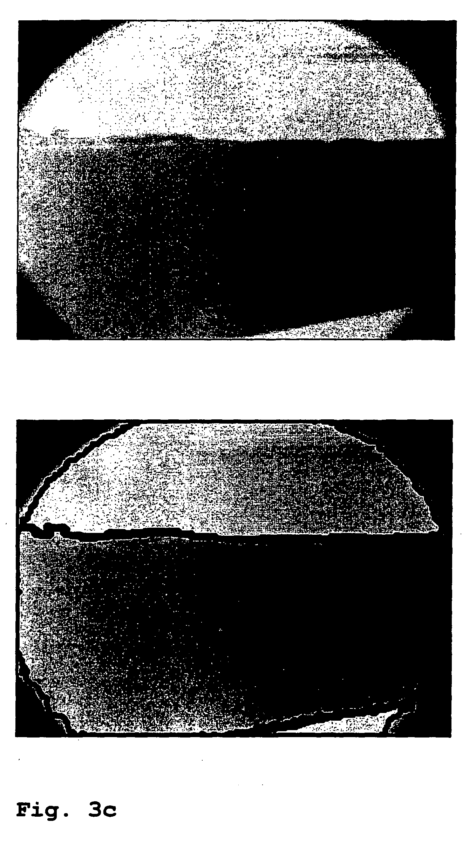

Die Figuren 3a bis 3c zeigen verschiedene IR-Strahlungsbilder im Falle von Fehlstellen und Unregelmäßigkeiten. Im Falle von Fig. 3a und 3c ist dabei in dem oberen Bild das jeweilige IR-Strahlungsbild gezeigt und in dem unteren Bild dasselbe Bild nach Bearbeitung mit einer gängigen Bildbearbeitungssoftware. Bei dem erfinderischen Verfahren ist es dabei nicht von Bedeutung, dass ein spezielles Bildbearbeitungsverfahren angewendet wird. Die Bildbearbeitungsresultate sollen lediglich zeigen, wie das erfinderische Verfahren zu einer Erleichterung der automatischen Erkennung von Defekten bei der Pulverauftragung führt.

In dem IR-Strahlungsbild von Fig. 3a ist im oberen Teil ein schmaler Streifen nach Art eines Grabens zu sehen, der von einer an der Klinge des Beschichters anhaftenden Verunreinigung herrührt. Anhand des IR-Strahlungsbildes kann dieser Graben mittels einer Bildbearbeitungssoftware ebenso erkannt werden, wie die hellen Fehlstellen im Bereich links oben.

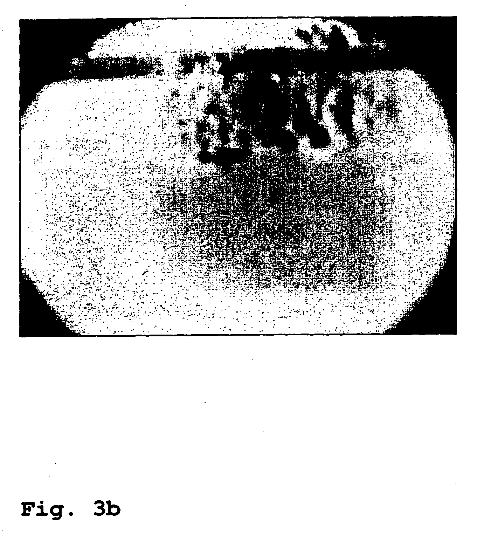

Fig. 3b zeigt einen breiten Streifen, der von einer Verunreinigung herrührt, sowie eine Schichtdickeninhomogenität im rechten oberen Bereich. Hier sei erwähnt, dass eine Schichtdickeninhomogenität gerade auch dadurch gut im Infraroten erkannt wird, dass die aufgetragene Schicht je nach Dicke unterschiedlich durchlässig für die IR-Strahlung von dem Material unter der aufgetragenen Schicht ist.

Fig. 3c zeigt ausgehendes Pulver im Beschichter an. Die Schichtdicke wird zum Ende des Schichtauftrags geringer. Während im hellen oberen Bildbereich noch Pulver aufgetragen wurde, erkennt man das fehlende Pulver im unteren Bildbereich an der veränderten Färbung aufgrund der um bis zu 30.°C erhöhen Temperatur. Die veränderte Färbung kann mittels Bildverarbeitung automatisch erkannt werden. Selbst unscharfe Kanten erschweren dabei nicht die Erkennung von zusammengehörigen Bereichen.

In einer weiteren Modifikation kann das erfasste IR-Strahlungsbild auch dazu verwendet werden, die Heizleistung der Heizstrahler 14 nachzuregeln, falls Temperaturinhomogenitäten auf der Oberfläche des frisch aufgetragenen Pulvers festgestellt werden. In einer weiteren Modifikation können instationäre Gaswirbel oder Strömungen mittels der Infrarotkamera detektiert werden. Diese schirmen die Wärmestrahlung von dem Pulverbett ab.

In einer weiteren Modifikation können die bereits belichteten Bereiche auf die korrekte Lage der Bauteile hin überprüft werden. Da die optisch gemessene Temperatur der gesinterten Bauteile höher ist, als die des nicht gesinterten Pulvers, kann ihre Lage im Baufeld auf dem IR-Strahlungsbild genau bestimmt werden.

Die Beschichtungsüberwachung mittels der Infrarotkamera kommt ohne zusätzliche Lichtquelle aus. Das Problem, das die Schattenbildung von der Art der Lichteinstrahlung abhängt, tritt nicht auf.

Obwohl oben beispielhaft ein Lasersinterverfahren bzw. Laserschmelzverfahren beschrieben wurde, ist das erfindungsgemäße Verfahren auch unter Zuhilfenahme anderer Methoden des selektiven Energieeintrags in eine Pulverschicht realisierbar. Beispielsweise können neben Lasern auch andere Lichtquellen, wie z.B. Lampen, verwendet werden. Des Weiteren kann die Energie zum Verfestigen nicht nur in Form von elektromagnetischer Strahlung, sondern auch in Form von Teilchenstrahlen, z.B. einem Elektronenstrahl, zugeführt werden. Ob die Energie mittels sukzessiven Überstreichens der relevanten Stellen einer Pulverschicht mit einem Strahl eingebracht wird oder die Energie unter Verwendung einer Maske und einer ungerichteten Strahlung (z.B. von einer Quarzlampe) selektiv eingebracht wird, hat keine Auswirkung auf das erfindungsgemäße Verfahren. Eine Anwendung auf Verfahren, bei denen ein Bindemittel zum selektiven Verfestigen des Pulvers eingebracht wird, ist ebenfalls möglich.

Das Verfahren lässt sich besonders gut dann anwenden, wenn die Vorrichtung zum Herstellen der dreidimensionalen Objekte einen oder mehrere Heizstrahler 14 enthält. Der Grund ist, dass die frisch aufgetragene Pulverschicht die Wärmestrahlung von den Heizstrahlern 14 in Richtung der Infrarotkamera 15 reflektiert. Dadurch ist der Anteil von reflektiertem Licht an dem von der Pulverschicht in Richtung Infrarotkamera ausgesendeten Licht größer. Dadurch werden aber zusätzlich zu den Unterschieden im Emissionsvermögen und in der Temperatur in stärkerem Maße Unterschiede im Reflexionsvermögen innerhalb der Schicht mit berücksichtigt, so dass sich der Kontrast bei vorhandenen Unregelmäßigkeiten in der Schicht erhöht.

Wenn in der Vorrichtung zum Herstellen der dreidimensionalen Objekte Heizstrahler 14 vorhanden sind, so lässt sich die Genauigkeit des erfindungsgemäßen Verfahrens dadurch erhöhen, dass bevorzugt Flächenstrahler als Heizstrahler 14 angebracht werden. Solche Flächenstrahler sind beispielsweise in DE 10 2005 024 790 A1 beschrieben. Gegenüber der Verwendung von Quarzröhrenstrahlern ist bei dem erfindungsgemäßen Verfahren die Verwendung solcher Flächenstrahler deshalb vorteilhaft, weil damit eine homogenere Bestrahlung der aufgebrachten Pulverschicht möglich ist. Dadurch werden die erfassten Unterschiede im Reflexionsvermögen der Schicht nicht durch eine inhomogene Bestrahlung überlagert.

## Patentansprüche

1. Verfahren zum Herstellen eines dreidimensionalen Objekts (10), bei dem das Objekt (10) durch schichtweises Verfestigen eines pulverförmigen Materials (11) an den dem Objekt (10) entsprechenden Stellen der jeweiligen Schicht gebildet wird,
wobei ortsaufgelöst die von einer aufgetragenen Pulverschicht (13) ausgehende IR-Strahlung erfasst wird, sodass ein IR-Strahlungsbild erhalten wird,
**dadurch gekennzeichnet,**
**dass** anhand des IR-Strahlungsbildes Fehlstellen und/oder geometrische Unebenheiten der aufgetragenen Pulverschicht (13) aufgrund unterschiedlicher Emissionsgrade und/oder unterschiedlicher Reflexionsgrade bestimmt werden.

2. Verfahren nach Anspruch 1, bei dem die Verfestigung mittels Einbringens von elektromagnetischer Strahlung oder Teilchenstrahlung in die Pulverschicht (13) erfolgt.

3. Verfahren nach Anspruch 1 oder 2, bei dem die Fehlstellen und/oder die geometrischen Unebenheiten in einem zweiten korrigierenden Schichtauftrag oder im Verlauf des Bauprozesses für das Objekt (10) korrigiert werden

4. Verfahren nach einem der Ansprüche 1 bis 3, bei dem während oder nach dem selektiven Verfestigen einer Schicht die Schicht auf Vollständigkeit und korrekte Lage der verfestigten Bereiche hin ausgewertet wird.

5. Verfahren nach einem der Ansprüche 1 bis 4, bei dem aus dem gemessenen IR-Strahlungsbild das Vorhandensein von instationären Gaswirbeln oder Strömungen bestimmt wird.

6. Verfahren nach einem der Ansprüche 1 bis 5, bei dem eine neue aufgetragene Pulverschicht (13) mittels Wärmestrahlung oder eine anderweitige Energiezufuhr auf eine Arbeitstemperatur gebracht wird.

7. Verfahren nach Anspruch 6, bei dem während der Aufheizphase das IR-Strahlungsbild der neu aufgebrachten Schicht erfasst wird und bei Vorliegen einer Inhomogenität die Heizleistung geregelt wird.

8. Verfahren nach Anspruch 6 oder 7, bei dem das Aufheizen unter Verwendung von Flächenstrahlern (14) durchgeführt wird.

9. Verfahren nach einem der Ansprüche 1 bis 8, bei dem das IR-Strahlungsbild mittels einer Infrarotkamera (15) erfasst wird.

10. Verfahren nach einem der Ansprüche 1 bis 9, bei dem Kunststoffpulver, insbesondere Polyamid oder Polystyrol, oder Metallpulver verwendet wird.

11. Verfahren nach einem der Ansprüche 1 bis 10,
bei dem zusätzlich anhand des IR-Strahlungsbildes Fehlstellen und/oder geometrische Unebenheiten der aufgetragenen Pulverschicht (13) aufgrund unterschiedlichen Temperaturen bestimmt werden.

## Claims

1. Method for producing a three-dimensional 1 object (10), in which method the object (10) is formed by solidifying a pulverulent material (11) layer by layer at those locations of the respective layer which correspond to the object (10),
wherein the IR radiation radiating from an applied layer of powder (13) is captured with spatial resolution such that an IR radiation image is obtained,
**characterized**
**in that** the IR radiation image is used to determine imperfections and/or geometric irregularities in the applied layer of powder (13) on account of different degrees of emission and/or different degrees of reflection.

2. Method according to Claim 1, in which the solidification is effected by introducing electromagnetic radiation or particle radiation into the layer of powder (13).

3. Method according to Claim 1 or 2, in which the imperfections and/or the geometric irregularities are corrected in a second, corrective layer application or over the course of the construction process for the object (10).

4. Method according to one of Claims 1 to 3, in which, during or atter the selective solidification of a layer, the layer is evaluated for completeness and for the correct position of the solidified regions.

5. Method according to one of Claims 7, to 4, in which the presence of non-steady-state gas vortices or flows is determined from the measured IR radiation image.

6. Method according to one of Claims 1 to 5, in which a new applied layer of powder (13) is brought to an operating temperature by means of thermal radiation or an alternative supply of energy.

7. Method according to Claim 6, in which, during the heating phase, the IR radiation image of the newly applied layer is captured and, if an inhomogeneity is present, the heating power is regulated.

8. Method according to Claim 6 or 7, in which the heating operation is carried out using surface radiators (14).

9. Method according to one of Claims 1 to 8, in which the IR radiation image is captured by means of an infrared camera (15).

10. Method according to one of Claims 1 to 9, in which synthetic powder, in particular polyamide or polystyrene, or metal powder is used.

11. Method according to one of Claims 1 to 10,
in which the 1R radiation image is used to additionally determine imperfections and/or geometric irregularities in the applied layer of powder (13) on account of different temperatures.

## Revendications

1. Procédé de fabrication d'un object tridimensionnel (10), dans lequel l'objet (10) est formé par solidification stratifiée d'un matériau pulvérulent (11) aux emplacements de chaque couche qui correspondent à l'objet (10),
dans lequel le rayonnement IR émis par la couche de poudre (13) appliquée est détecté avec résolution spatiale de manière obtenir une image en rayonnement IR,
**caractérisé en ce que**
les emplacements défectueux et/ou les irrégularités géométriques de à couche de poudre (13) appliquée sont détectés à l'aide de l'image en rayonnement IR sur base de différences de taux d'émission et/ou de différences de taux de déflexion.

2. Procédé selon la revendication 1, dans lequel la solidification s'effectue en apportant un rayonnement électromagnétique ou un faisceau de particules dans 1a couche de poudre (13).

3. Procédé selon les revendications 1 ou 2, dans lequel les emplacements défectueux et/ou les irrégularités géométriques sont corrigés par l'application d'une deuxième couche de correction ou au cours du processus de construction de l'objet (10).

4. Procédé selon l'une des revendications 1 à 3, dans lequel pendant ou après la solidification sélective d'une couche, on vérifie si la couche est complète et si les zones solidifiées sont en position correcte.

5. Procédé selon l'une des revendications 1 à 4, dans lequel la présence de tourbillons de gaz ou d'écoulements non stationnaires est déterminée en mesurant l'image en rayonnement IR.

6. Procédé selon l'une des revendications 1 à 5, dans lequel une couche de poudre (13) nouvellement appliquée est amenée à une température de travail au moyen d'un rayonnement thermique ou d'un autre apport d'énergie.

7. Procédé selon la revendication 6, dans lequel l'image en rayonnement IR de la couche nouvellement appliquée est saisine pendant la phase de chauffage, la puissance de chauffage étant régulée en cas de présence d'inhomogénéités.

8. Procédé selon les revendications 6 ou 7, dans lequel le chauffage est réalisé en recourant à des radiants plats (14).

9. Procédé selon l'une des revendications 1 à 8, dans lequel l'image en rayonnement IR es saisie au moyen d'une caméra infrarouge (15).

10. Procédé selon l'une des revendications 1 à 9, qui utilise une poudre de matière synthétique, en particulier en polyamide ou en polystyrène, ou une poudre métallique.

11. Procédé selon l'une des revendications 1 à 10, dans lequel des emplacements défectueux et/ou des irrégularités géométriques de la couche de poudre (13) appliquée sont déterminés à partir de différences de température en plus de l'être à l'aide de l'image en rayonnement IR.
